# FASCICULE DE BREVET EUROPEEN

(11) **EP 0 651 198 B1**
(45) Date de publication et mention de la délivrance du brevet: **22.09.1999**
(21) Numéro de dépôt: 94401709.4
(22) Date de dépôt: 26.07.1994
(51) Int. Cl.: F16L 37/088, F16L 37/084

(54) **Connexion rapide pour emmanchement d'un tube rigide dans un embout**
Schnellverbindung zur Verbindung von starren Rohren in einem Anschlussstück
Quick-acting connection between a rigid pipe and a connector

(30) Priorité: 01.10.1993 FR 9311706
(43) Date de publication de la demande: 03.05.1995
(60) Demande divisionnaire: 98204024.8
(73) Titulaire: Etablissements CAILLAU, 92130 Issy-les-Moulineaux (FR)
(72) Inventeur: Detable, Pascal, F-41130 Villedieu (FR); André, Michel, F-41200 Romorantin Lanthenay (FR)
(74) Mandataire: Descourtieux, Philippe

(56) Documents cités:
- EP-A- 0 511 891
- EP-A- 0 530 778
- DE-A- 3 837 492
- FR-A- 2 266 091
- US-A- 4 632 436
- US-A- 4 856 823

## Description

On connaît déjà, notamment par les brevets FR-A-2.576.771, 2.614.084, 2.617.943, et EP-A-440 564, 511 891, 605 801 ainsi que par la demande de brevet français 93 05558, divers types de connexion rapide d'un tube rigide emmanché dans un embout pour y être verrouillé axialement et assurer en outre un raccordement étanche de deux canalisations véhiculant des fluides, quelquefois à température élevée. L'embout d'une telle connexion rapide, très utilisée dans les fabrications de grande série, notamment dans l'industrie automobile, comporte essentiellement, à partir de l'entrée de l'embout pour le tube :
- un anneau de verrouillage, élastiquement déformable dans le sens radial et disposé dans un logement de l'embout, susceptible de constituer une butée axiale pour un bourrelet faisant radialement saillie par rapport à la surface extérieure du tube,
- un dispositif d'étanchéité, en général au moins un joint annulaire, également disposé dans un logement de l'embout et susceptible d'être en contact avec la surface extérieure du tube rigide après son emmanchement.

Ce type de connexion permet le verrouillage automatique du tube au cours de son emmanchement dans l'embout, l'anneau de verrouillage se déformant élastiquement dans le sens radial lors du passage du bourrelet du tube. Une zone spéciale de l'anneau de verrouillage fait cependant radialement saillie à l'extérieur de l'embout, au travers d'une ouverture ménagée dans la paroi de ce dernier de sorte qu'une pression sur cette zone spéciale permet à nouveau de déformer radialement l'anneau pour autoriser le démontage de la connexion.

Généralement la forme des flancs du bourrelet du tube n'est pas imposée par les utilisateurs mais, de plus en plus, certains d'entre eux exigent, aussi bien pour des raisons de sécurité que pour faciliter l'interchangeabilité, que le flanc du bourrelet servant de face d'appui à l'anneau de verrouillage soit situé dans un plan sensiblement radial par rapport à l'axe du tube. Cette première exigence impose diverses contraintes, devenues usuelles, dans la conception et la réalisation de la connexion.

D'autre part, les utilisateurs formulent, pour certaines applications, d'autres exigences quelquefois contradictoires.

C'est ainsi, par exemple, qu'il est fréquemment demandé que lors du premier montage de la connexion, un témoin de son bon verrouillage, éventuellement détachable de l'embout, permette un contrôle facile. Mais il est en même temps demandé qu'un témoin visible du bon verrouillage soit également prévu, permettant à nouveau le contrôle après un démontage de la connexion.

De même, il est fréquemment demandé que le démontage puisse être effectué manuellement, de préférence sans aucun outil ou, au contraire, il sera exigé que ce démontage ne soit possible qu'au moyen d'un outil spécifique, ce qui l'interdit à toute personne ne le possédant pas.

La demanderesse a donc cherché à améliorer la structure connue de l'embout d'une connexion rapide satisfaisant aux contraintes usuelles dans le cas du raccordement d'un tube dont le bourrelet présente un flanc radial pour l'appui de l'anneau de verrouillage, de façon que cet embout soit susceptible de recevoir, sans modification substantielle, des éléments complémentaires appropriés pour remplir tout ou partie des fonctions supplémentaires exigées par les utilisateurs, même si certaines d'entre elles apparaissent a priori contradictoires ou incompatibles sur la même connexion.

L'invention concerne un embout de connexion rapide du type défini dans le préambule de la revendication 1, établi sur la base du document EP-A-0 511 891.

Selon l'invention, l'anneau de verrouillage est formé par une bande métallique mince, enroulée sur elle-même de manière à présenter un profil fermé, les deux extrémités de ladite bande étant fixées l'une à l'autre, ledit anneau présentant un profil généralement oblong et la zone faisant radialement saillie à l'extérieur de l'embout étant située à une extrémité du grand diamètre du profil oblong ; la zone de cet anneau faisant radialement saillie à l'extérieur de l'embout est constituée par un pontet en U inversé dont la base forme, pour l'essentiel, la partie radialement saillante à l'extérieur du corps de l'embout.

Grâce à cette structure, et plus particulièrement à celle de l'anneau de verrouillage, l'embout de la connexion rapide peut ne comporter qu'un nombre limité d'éléments en métal mince, généralement emboutis et sertis les uns aux autres. L'encombrement radial de la connexion est de ce fait limité, ce qui est particulièrement apprécié par les utilisateurs si le raccordement des canalisations doit être effectué dans des zones encombrées. De plus, les éléments essentiels de la connexion étant métalliques, seront peu sensibles aux variations de température et la tenue en service du raccordement sera généralement améliorée par rapport aux connexions analogues. Enfin, comme on le verra plus loin, la structure de base de la connexion selon l'invention peut être équipée, sans modifications importantes, d'organes complémentaires permettant de remplir des fonctions secondaires exigées des utilisateurs pour certaines applications de la connexion.

L'invention sera mieux comprise et ses avantages ainsi que diverses caractéristiques secondaires apparaîtront au cours de la description qui va suivre d'un exemple de réalisation et de quelques variantes en référence aux dessins annexés dans lesquels :
- La figure 1 est une vue éclatée, en perspective, des divers éléments constituant une connexion rapide selon l'invention, avant l'assemblage de l'embout.
- La figure 2 est une vue en coupe axiale, avec arrachement partiel, d'une connexion selon la figure ***1***, avant le verrouillage du tube.
- La figure 3 est une vue analogue à la figure 2, avec arrachement partiel, après verrouillage du tube.
- La figure 4 est une vue de face de l'anneau de verrouillage, suivant la flèche ***F*** de la figure 2, montrant en outre, en trait ponctué et partiellement, la saillie radiale de certaines zones de l'anneau à l'extérieur de l'embout.
- La figure 5 est une vue de côté de l'anneau de la figure 4 montrant en outre, en trait ponctué, le verrouillage du tube par l'anneau et l'appui de ce dernier sur l'embout.
- La figure 6 est une section selon VI-VI de la figure 5.
- La figure 7 est une vue analogue à la figure 4, dans le cas d'une variante de réalisation.
- Les figures 8 et 9 sont des vues analogues aux figures 2 et 3 dans le cas d'une variante de réalisation équipée d'un témoin de verrouillage permanent et coulissant.
- La figure 10 est une vue en perspective du témoin de verrouillage de la figure 8.
- La figure 11 est une vue en coupe analogue à la figure 9 qui montre un embout comprenant un anneau de verrouillage qui n'est pas conforme à l'invention et une variante de réalisation du témoin de verrouillage qui peut équiper un embout conforme à l'invention ; sur cette figure, le tube est supposé extrait de l'embout.
- La figure 12 est une coupe selon XII-XII de la figure 11.
- La figure 13 est une vue en coupe d'une structure d'embout analogue à celle de la figure 11 équipée d'un témoin de verrouillage instantané.
- La figure 14 est une coupe suivant XIV-XIV de la figure 13.
- Les figures 15 et 16 sont des vues partielles analogues aux figures 4 et 5 qui montrent une partie d'un anneau de verrouillage sur laquelle on ne distingue pas la caractéristique de l'invention selon laquelle les extrémités de la bande formant l'anneau sont fixées l'une à l'autre, ces figures montrant une variante, visant à empêcher le démontage manuel de la connexion et pouvant équiper un embout conforme à l'invention.
- La figure 17 est une vue partielle analogue à la figure 15 dans le cas d'une autre variante visant à empêcher le démontage manuel de la connexion.
- Les figures 18 et 19 sont des vues partielles analogues aux figures 8 et 9 dans le cas d'une variante comportant en outre un témoin détachable.
- La figure 20 est une vue de face du témoin détachable, suivant la flèche ***F'*** de la figure 18.

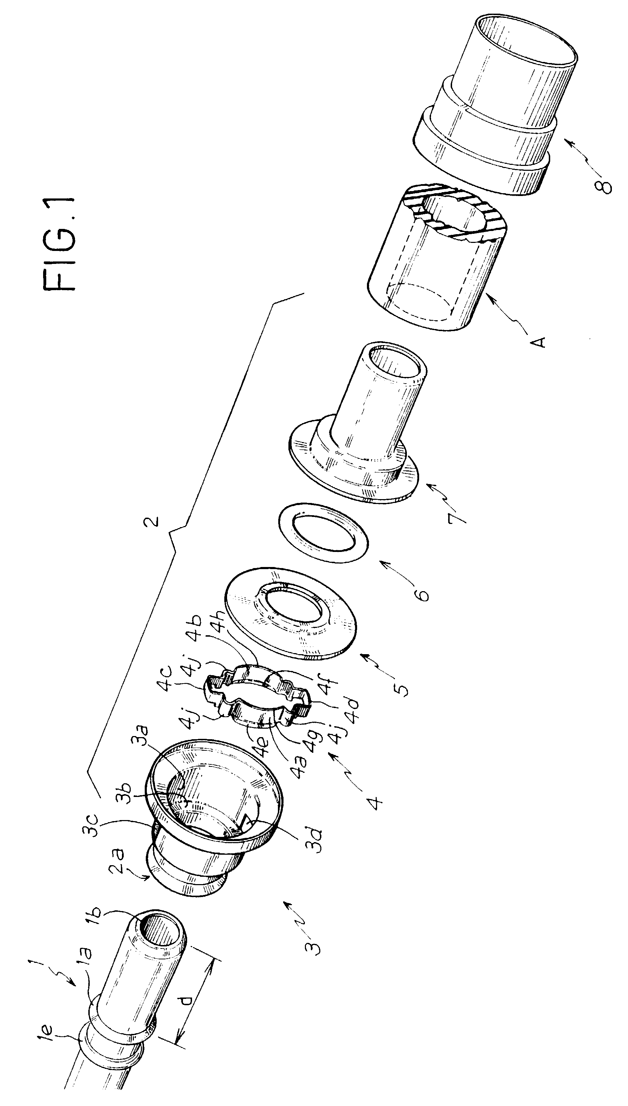

Si l'on se reporte tout d'abord aux figures ***1***, ***2*** et ***3***, on voit une connexion qui comporte, d'une part, un tube ***1*** en matériau rigide, tel que du métal, ou semi-rigide, tel qu'une matière plastique, d'autre part, un embout désigné par la référence générale ***2*** ; la partie arrière de ce dernier, située à droite sur les figures, est assemblée de façon étanche à un tuyau souple ***A***, tel qu'une Durit en caoutchouc ou matériau analogue. L'embout ***2*** est constitué par un corps ***3***, un anneau de verrouillage ***4***, une paroi radiale annulaire ***5***, un joint annulaire d'étanchéité ***6*** et une douille ***7***. Une douille extérieure ***8*** est susceptible d'enserrer le tuyau souple ***A*** préalablement emmanché sur la douille ***7***. Les éléments ***3***, ***5***, ***7*** et ***8*** sont, de préférence, réalisés en métal embouti.

Ainsi, qu'on le sait, notamment par le brevet européen 440 564, la douille ***7*** permet de constituer un premier logement annulaire, fermé par la paroi radiale ***5***, pour le joint ***6***, lesdites douille et paroi radiale étant assemblées au corps ***3*** de l'embout par un sertissage de leur périphérie. De plus, après emmanchement du tuyau souple ***A*** sur la partie arrière de la douille ***7***, la douille extérieure ***8*** coiffe l'extrémité libre du tuyau et en assure la fixation par pincement ; un sertissage de la périphérie de la douille extérieure ***8*** sur celle du corps ***3*** termine la formation de la connexion.

L'embout ***2*** présente un deuxième logement annulaire désigné par ***3****a*** et formé dans le corps ***3***. Dans ce logement est disposé l'anneau de verrouillage ***4*** dont les bords antérieurs, situés à gauche sur les figures, peuvent prendre appui, au moins dans certaines zones que l'on précisera plus loin, sur la face radiale interne ***3****b*** du logement, située du côté de l'entrée du corps. Cette dernière constitue l'entrée ***2****a*** de l'embout ***2*** et est destinée à recevoir le tube ***1***.

Le tube ***1*** est cylindrique et présente un bourrelet ***1a***, situé à une distance ***d*** de son extrémité libre ***1b*** et faisant saillie radialement sur sa surface extérieure. Le bourrelet ***1a*** est constitué par une rampe ***1c***, du côté de l'extrémité libre ***1b*** mais son flanc ***1d*** opposé à cette extrémité est sensiblement radial. On sait que ce flanc radial est destiné à servir de face d'appui sur l'anneau de verrouillage après emmanchement du tube ***1*** dans l'embout ***2***.

Le tube ***1*** comporte avantageusement un deuxième bourrelet saillant *le,* situé un peu en arrière du premier par rapport à l'extrémité libre ***1b***, le diamètre extérieur de ce deuxième bourrelet étant au moins égal au diamètre extérieur du flanc radial ***1d*** du premier bourrelet.

L'extrémité libre ***1b*** du tube ainsi que l'entrée 2a de l'embout sont de préférence chanfreinées, le diamètre intérieur de l'entrée ***2a*** étant sensiblement égal au diamètre extérieur du bourrelet ***1e,*** cependant que le diamètre intérieur de la douille ***7*** est sensiblement égal au diamètre du tube ***1.***

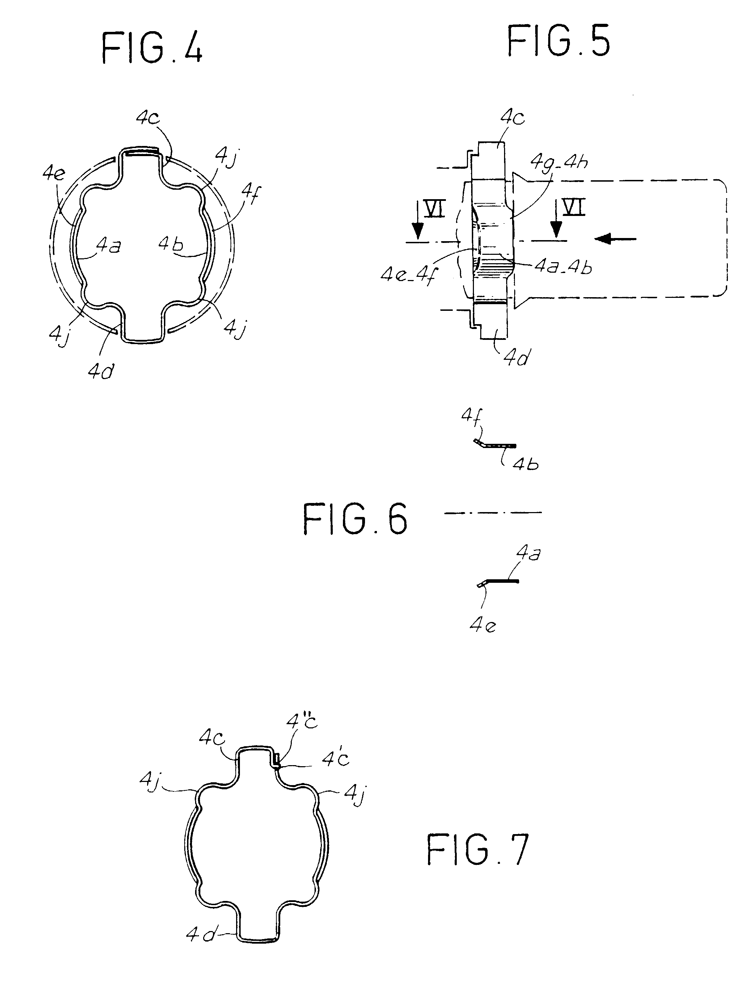

L'anneau de verrouillage ***4***, bien visible également sur les figures 4, 5 et 6 constitue l'un des éléments importants de la connexion. Il est formé par une bande métallique mince enroulée sur elle-même et présentant, comme on le voit bien sur la figure 4, un profil fermé généralement oblong. Le petit diamètre de ce profil est, à l'état libre, sensiblement égal au diamètre extérieur du tube et, en tout cas, inférieur à celui du bourrelet ***1a.***

Dans sa région centrale, l'anneau **4** présente deux portions cylindriques ***4a*** et ***4b***,cependant que dans les régions situées aux extrémités du grand diamètre du profil, la bande constituant l'anneau est conformée en pontets ***4c*** et ***4d*** en U inversé, la base du U définissant elle-même l'extrémité du grand diamètre du profil.

Les bords antérieurs ***4e*** et ***4f*** des portions cylindriques ***4a*** et ***4b***, c'est-à-dire ceux situés du côté de l'entrée ***2a*** de l'embout sont évasés ainsi qu'on le voit bien sur la figure 6. Ainsi qu'on le verra plus loin, cette disposition est de nature à faciliter l'emmanchement du tube dans l'embout. De préférence, le diamètre extérieur des bords évasés ***4e-4f*** est légèrement inférieur au diamètre intérieur de l'entrée ***2a*** de l'embout. D'autre part, les bords postérieurs ***4g*** et ***4h*** des mêmes portions cylindriques font axialement saillie par rapport au reste du bord postérieur de l'anneau ***4*** (figure 5).

La région du pontet ***4c*** constitue la zone de raccordement des deux extrémités de la bande formant l'anneau. Ces deux extrémités se recouvrent, par exemple à la base du U et sont fixées l'une à l'autre par tout moyen approprié, tel qu'un rivetage ou un soudage par points (FIG. 4). Toutefois, pour des raisons qui apparaîtront plus loin, il peut être avantageux que la liaison mécanique entre les deux extrémités de la bande ne soit pas rigide, notamment en compression. Sur la figure 7, on a représenté une liaison articulée constituée par un simple repli ***4'c*** de l'une des extrémités de la bande, ce repli étant simplement engagé dans une petite ouverture ***4"c*** ménagée dans l'autre extrémité. Ainsi la déformabilité de l'anneau n'est affectée par aucune rigidification locale qui pourrait se révéler gênante.

Entre les portions cylindriques ***4a-4b*** et les pontets ***4c-4d*** l'anneau ***4*** présente avantageusement des oreilles ***4j*** faisant radialement saillie par rapport au profil oblong de l'anneau. Comme on le voit sur les figures 4 et 7, les oreilles ***4j*** sont, de préférence, au nombre de quatre, disposées symétriquement les unes des autres par rapport au centre de l'anneau. En raison de la forme oblongue de l'anneau et de la saillie radiale des oreilles, ces dernières constituent une zone d'appui efficace du bord antérieur de l'anneau sur la face radiale interne ***3b*** du logement ***3a*** sans que les bords antérieurs ***4e*** et ***4f*** des portions cylindriques soient elles-mêmes en contact avec cette face interne ***3b***.

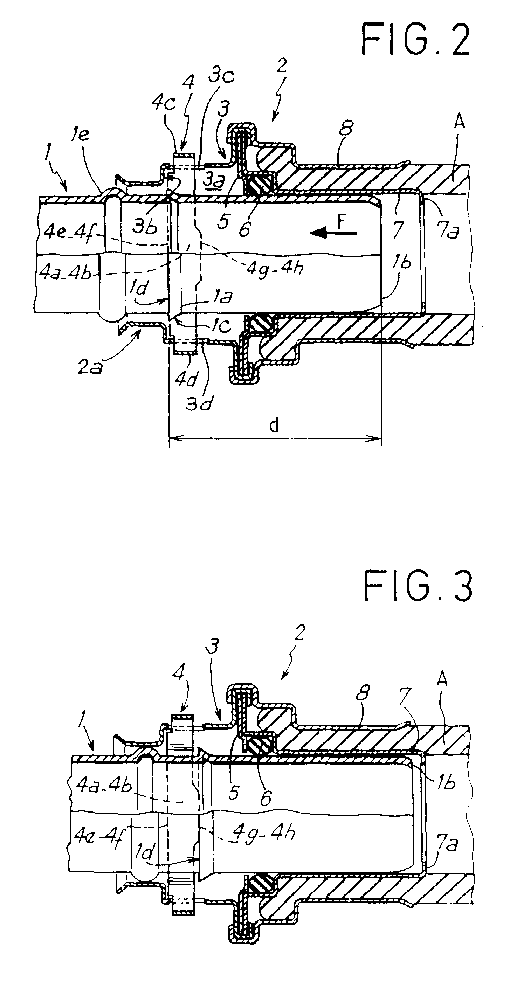

Il convient encore d'indiquer que dans la région du logement ***3a*** de l'anneau, le corps ***3*** présente au moins une ouverture dont les dimensions sont suffisantes pour y faire pénétrer une partie de l'anneau ***4*** faisant radialement saillie à l'extérieur du corps 3. De préférence et comme représenté sur les figures 1 à 3, il est prévu deux ouvertures ***3c*** et ***3d***, diamétralement opposées, dont la forme correspond sensiblement à celle de la base des pontets ***4c*** et ***4d.*** A cet égard, on soulignera que le grand diamètre du profil oblong de l'anneau est, à l'état libre de ce dernier, quelque peu supérieur au diamètre interne du logement ***3a****.* Ainsi qu'on le voit bien sur la figure 2, lorsque l'anneau ***4*** est mis en place dans son logement ***3a***, les pontets ***4c***,***4d*** sont, d'une part, engagés dans les ouvertures ***3c***,***3d*** dans lesquelles ils sont immobilisés axialement, avec cependant tous les jeux nécessaires au montage, et font, d'autre part, légèrement saillie par leur base, à la surface extérieure du corps ***3***.

Comme on l'a indiqué plus haut, il pourrait n'exister qu'une seule ouverture ***3c***, le pontet ***4d*** étant alors soit supprimé, soit en appui sur la face cylindrique interne du logement ***3a***. On reviendra plus loin sur ce type de réalisation.

L'anneau de verrouillage est bien évidemment disposé dans le logement ***3a*** du corps ***3*** avant le sertissage de ce dernier sur la périphérie extérieure de la paroi radiale ***5*** et de la douille ***7*** dans les conditions indiquées plus haut. On notera ici que la douille ***7*** possède à son extrémité arrière une butée ***7a*** et que la distance axiale de cette butée aux bords postérieurs ***4g-4h*** des parties cylindriques de l'anneau ***4*** est sensiblement égale, mais de préférence légèrement supérieure à la distance ***d*** précédemment définie.

Le fonctionnement de la connexion selon l'invention est sans doute déjà apparu à l'homme du métier ; on en soulignera cependant les points importants en se référant plus particulièrement aux figures 2 et 3.

L'extrémité ***1b*** du tube ***1*** est engagée dans l'entrée ***2a*** de l'embout et pénètre dans la douille ***7*** ; la surface extérieure du tube entre tout d'abord en contact avec le joint annulaire ***6*** puis avec la surface interne de la douille. L'emmanchement du tube est poursuivi jusqu'à ce que l'extrémité ***1b*** vienne en appui sur la butée ***7a*** de la douille.

Au cours de ce mouvement, la rampe ***1c*** du bourrelet ***1a*** rencontre les bords évasés ***4e-4f*** des portions cylindriques de l'anneau ***4***, qui sont ainsi quelque peu déformées radialement, de façon élastique. Lorsque la rampe ***1c*** a dépassé les bords postérieurs ***4g-4h*** de l'anneau, celui-ci se rétracte élastiquement et ses parties cylindriques ***4a-4b*** viennent en contact avec la surface extérieure du tube entre les bourrelets ***1a*** et ***1e***, cependant que lesdits bords postérieurs ***4g-4h*** sont susceptibles de constituer un appui pour le flanc ***1d*** du bourrelet. Le tube est alors verrouillé axialement dans l'embout puisque les oreilles ***4j*** de l'anneau peuvent s'appuyer sur la face interne ***3b*** du logement de l'anneau dans le corps ***3*** (FIG.3). On notera toutefois que le verrouillage laisse subsister des jeux axiaux qui sont éliminés lorsqu'un fluide sous pression est véhiculé par la canalisation sur laquelle se trouve la connexion.

On peut enfin rappeler que le bourrelet supplémentaire ***1e***, qui se trouve en contact avec la surface intérieure du corps dans la région de l'entrée ***2a*** de l'embout, facilite le guidage du tube dans la phase finale de son emmanchement et surtout évite, en coopération avec la douille ***7***, les oscillations radiales du tube dans l'embout.

Le démontage de la connexion s'effectue facilement. L'un au moins des pontets ***4c-4d*** faisant saillie à l'extérieur de l'embout, notamment à travers l'ouverture ***3c***, il suffit de les rapprocher radialement l'un de l'autre, soit manuellement, soit à l'aide d'un outil approprié, pour provoquer une déformation élastique de l'anneau.

Grâce à la forme oblongue de ce dernier, sa région centrale cylindrique voit son diamètre augmenter, libérant ainsi l'appui du flanc ***1c*** du bourrelet du tube sur les bords postérieurs ***4g-4h*** de l'anneau, ce qui permet l'extraction du tube de l'embout dans le sens de la flèche ***F*** (FIG.2).

On notera ici que la liaison mécanique articulée des extrémités de la bande constituant l'anneau, telle qu'elle est représentée sur la figure 7, facilite la déformation de ce dernier et sera particulièrement avantageuse si la connexion a un petit diamètre.

Bien que l'on ait jusqu'à présent décrit une connexion dans laquelle les deux extrémités du profil oblong de l'anneau de verrouillage sont conformées en pontet en U, il convient de souligner à nouveau que seule l'une au moins de ces extrémités doit présenter cette forme particulière.

La structure de la connexion qui vient d'être décrite est susceptible d'être facilement équipée d'organes complémentaires ou de recevoir des modifications mineures permettant d'assurer des fonctions spécifiques parfois demandées par les utilisateurs.

C'est ainsi, par exemple, que certains utilisateurs demandent un témoin permanent du bon verrouillage du tube dans l'embout. L'invention permet de satisfaire à cette exigence.

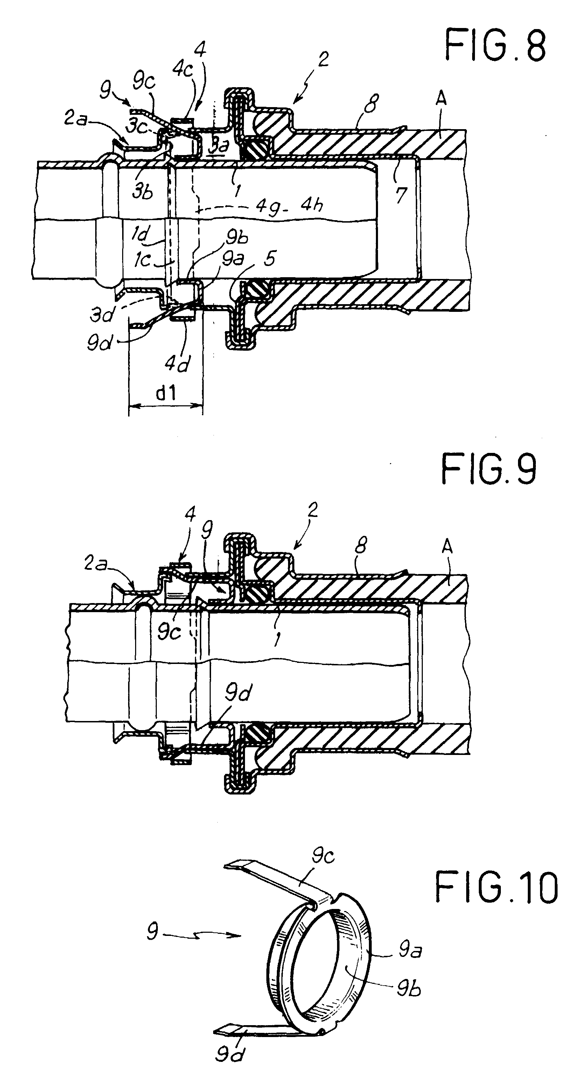

Les figures 8 et 9 sont analogues aux figures 2 et 3 mais l'embout qu'elles représentent comporte un témoin de verrouillage bien visible sur la figure 10.

Le témoin permanent de verrouillage, désigné par la référence générale ***9*** est constitué par une bague ***9a***, généralement métallique, dont le diamètre intérieur est sensiblement égal à celui du tube ***1*** et dont le diamètre extérieur est au plus égal au diamètre intérieur du *logement* ***3a***. La périphérie intérieure de la bague se prolonge axialement par un manchon ***9b****,* cependant qu'à sa périphérie extérieure sont disposées deux pattes ***9c*** et ***9d*** s'étendant axialement dans la même direction que le manchon ***9a.*** Les deux pattes ***9c*** et ***9d*** sont diamétralement opposées et leur longueur ***d***_{***1***} sera définie ultérieurement.

Ainsi qu'on le voit bien sur la figure 8, le témoin ***9*** est disposé dans le logement ***3a***, son manchon ***9b*** et les pattes ***9c*** et ***9d*** s'étendant en direction de l'entrée 2a de l'embout à travers les pontets ***4c-4d*** de l'anneau ***4***.

Avant l'emmanchement du tube ***1***, les pattes ***9c-9d***, traversant les ouvertures ***3c-3d***, grâce à leur flexibilité, sont bien visibles à l'extérieur de l'embout, au-delà des pontets ***4c-4d.*** D'autre part, le manchon ***9b*** est engagé dans la région centrale de l'anneau ***4***. Ainsi le mouvement d'emmanchement du tube ***1*** jusqu'à la position représentée sur la figure 8 ne rencontre pratiquement aucune autre résistance que celle nécessaire pour franchir le joint ***6***.

Le mouvement d'emmanchement se poursuivant, la rampe ***1c*** repousse le manchon ***9b*** du témoin ***9*** qui coulisse vers la droite de la figure 8 dans le logement ***3a***. Simultanément les pattes ***9c-9d*** coulissent sous les pontets ***4c*-*4d***.Lorsque le manchon ***9b*** a quitté les portions cylindriques de l'anneau ***4***, celles-ci s'appuient sur la rampe ***1c*** et le verrouillage axial du tube s'opère, de la façon décrite plus haut, dès que les bords postérieurs ***4g-4h*** de l'anneau peuvent constituer un appui pour le flanc radial ***1d*** du bourrelet ***1a*** du tube. Dans cette position, visible sur la figure 9, les pattes flexibles ***9c-9d*** du témoin ***9*** sont pratiquement cachées en totalité par la base des pontets ***4c-4d***. C'est l'indication certaine du bon verrouillage du tube dans l'embout. Il suffit, à cet effet, que la longueur ***d***_{***1***} des pattes soit voisine de la distance axiale entre la paroi radiale **5** et la face interne ***3b*** du logement ***3a.***

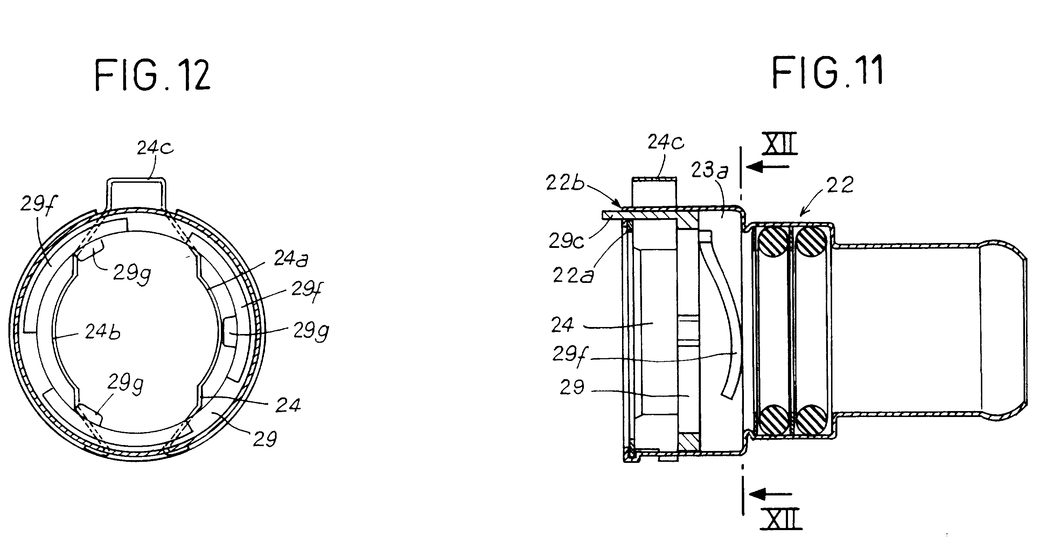

On notera cependant ici que l'effacement du témoin de verrouillage qui vient d'être décrit est progressif car il accompagne le mouvement d'emmanchement du tube. A l'inverse, lorsque ce dernier est extrait de l'embout, l'élasticité des pattes du témoin lui permet d'être ramené vers l'entrée de l'embout, dans une position, analogue à celle visible sur la figure 8, où chaque patte est bien visible au-delà du pontet de l'anneau de verrouillage. La forme des ouvertures ménagées dans la paroi du logement de l'anneau de verrouillage pour le passage des pontets est étudiée pour faciliter l'appui de la face externe des pattes et, à cet égard, la réalisation représentée sur la figure 11 est avantageuse.

Si l'on se reporte maintenant aux figures 11 et 12 on voit une variante de réalisation dans laquelle le témoin de verrouillage progressif est en matière plastique. Les éléments déjà décrits et représentés sur les figures précédentes portent les mêmes références augmentées de 20. L'anneau de verrouillage ***24*** est constitué par une agrafe ouverte avec un seul pontet ***24c*** n'est pas conforme à l'invention.

Il doit être cependant entendu que cet anneau pourrait être fermé en conformité avec l'invention, avec deux pontets diamétralement opposés, comme cela a été décrit en référence aux figures 2 et 3.

Le témoin de verrouillage ***29*** est constitué par une bague en matière plastique montée coulissante dans le logement ***23a*** de l'anneau ***24***, cette bague possédant, sur sa face opposée à l'entrée de l'embout, une pluralité de lamelles élastiques ***29f*** prenant appui sur le fond annulaire du logement ***23a***. Sur sa périphérie interne, la bague ***29*** présente une pluralité d'ergots ***29g*** susceptibles d'entrer en prise uniquement avec la rampe du bourrelet du tube au cours de l'emmanchement de celui-ci.

Enfin du côté de l'entrée ***22a*** de l'embout, la bague ***29*** présente au moins une patte axiale ***29c*** susceptible de coulisser dans une ouverture ***22b*** ménagée dans la rondelle d'entrée ***22a*** et éventuellement dans le sertissage correspondant de l'embout.

Le fonctionnement du témoin de verrouillage ***29*** est tout à fait analogue à celui du témoin ***9*** décrit plus haut, la bague étant repoussée par la rampe du tube (non représenté) vers le fond du logement ***23a*** contre l'action des lamelles élastiques ***29f***. Toutefois on notera que la matière plastique peut être colorée facilement, de sorte qu'avant son effacement progressif dans le logement ***23a***, la patte ***29c*** du témoin est bien visible à l'extérieur de l'embout, ainsi que l'on s'en rend compte à l'examen de la figure 11. Un autre avantage de cette réalisation est l'absence totale d'agressivité de l'extrémité libre de la patte ***29c*** avant le verrouillage du tube. Lors du démontage de la connexion, les lamelles élastiques ***29f*** repoussent la bague ***29*** vers l'entrée de l'embout, rendant à nouveau visible la patte ***29c***.

Comme on l'a indiqué, la mise en place des témoins de verrouillage ***9*** ou ***29*** est progressive. Or certains utilisateurs souhaitent disposer d'un témoin dont la mise en place est instantanée et s'accompagne, si possible, d'un bruit indiquant le verrouillage.

Tout en conservant la des structure d'embout qui a été décrite plus haut, l'invention permet de satisfaire facilement à cette exigence particulière.

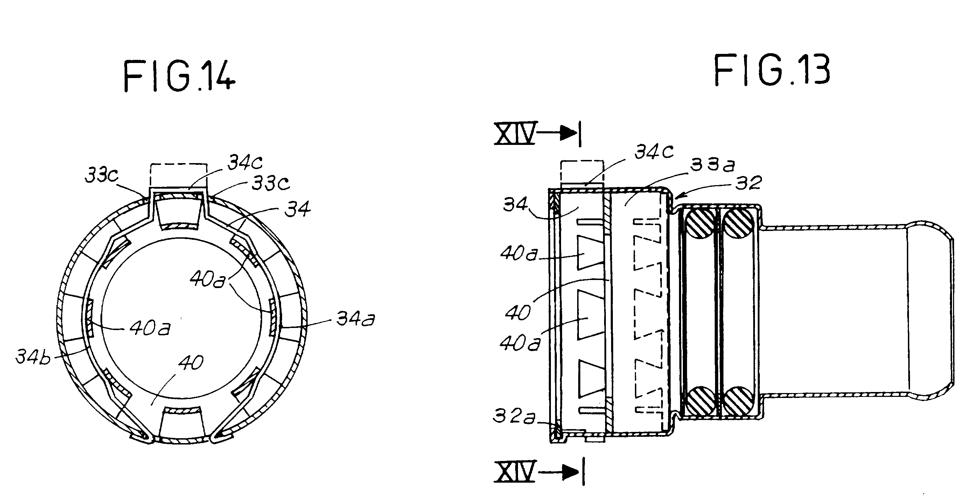

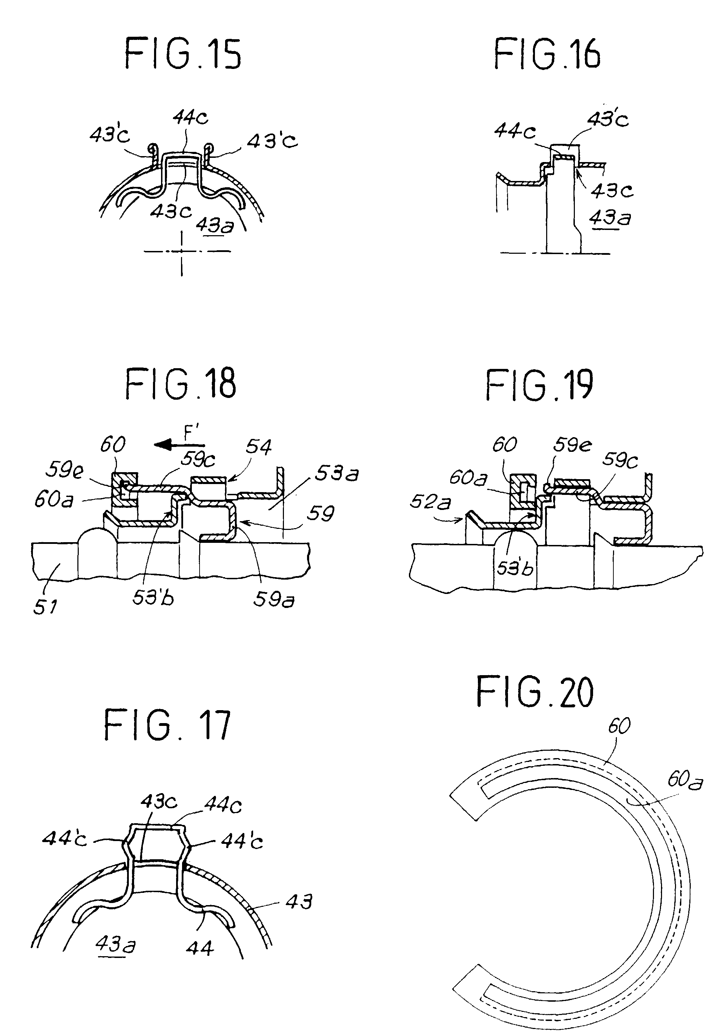

Si l'on se reporte maintenant aux figures 13 et 14, on voit une structure d'embout ***32*** analogue à celle représentée sur la figure 11, les éléments déjà décrits possédant les mêmes références augmentées de 10.

Dans le logement ***33a*** est montée coulissante une rondelle crénelée ***40*** dont le diamètre extérieur est voisin du diamètre du logement et dont le diamètre intérieur est sensiblement égal à celui du tube (non représenté) mais inférieur à celui de son bourrelet de verrouillage. Sur un diamètre approprié, au moins égal à celui du bourrelet du tube, certains créneaux de la rondelle sont rabattus pour former des pattes ***40a*** s'étendant axialement.

Au montage de l'embout ***32***, après mise en place des joints d'étanchéité, la rondelle crénelée ***40*** est introduite dans le logement ***33a***, l'extrémité de ses pattes ***40a*** étant dirigée vers l'entrée de l'embout. L'agrafe de verrouillage ***34*** est alors disposée autour des pattes ***40a,*** cependant que son pontet ***34c*** est engagé dans l'ouverture prévue à cet effet dans la paroi du logement et que les extrémités libres de l'agrafe sont elles-mêmes fixées à l'embout dans des conditions analogues à celles décrites plus haut. La rondelle d'entrée ***32a*** est enfin sertie pour constituer l'entrée de l'embout ***32***.

Ainsi qu'on le voit bien sur la figure 14, les portions cylindriques ***34a*** et ***34b*** de l'agrafe de verrouillage qui reposent sur la face externe de certaines pattes ***40a*** définissent, après montage de l'embout, un passage axial dont le diamètre est supérieur à celui du bourrelet du tube destiné à être emmanché dans l'embout. Ceci résulte de la déformation radiale élastique de l'agrafe ***34***, qui a elle-même pour conséquence que son pontet ***34c*** affleure sur la paroi extérieure du logement ***33a***, ainsi qu'on l'a représenté en trait plein sur les figures.

En revanche, la périphérie interne de la rondelle ***40*** constitue un obstacle axial dans le passage défini par les portions cylindriques ***34a*** et ***34b****,* dont l'utilité va apparaître dans ce qui suit.

Lorsqu'on introduit le tube à verrouiller dans l'embout ***32***, son bourrelet ne rencontre aucun obstacle jusqu'à ce que sa rampe atteigne la rondelle ***40***. Celle-ci se trouve ensuite repoussée au cours de la poursuite de l'emmanchement du tube jusqu'à la position représentée en trait ponctué sur la figure 13.

L'agrafe de verrouillage ***34*** n'étant plus maintenue par les pattes ***40a,*** peut alors s'appliquer brusquement sur la paroi du tube et assurer son verrouillage dans les conditions qui ont été décrites plus haut. Simultanément, un bruit métallique de claquement peut être perçu, cependant que le pontet ***34c*** fait saillie sur la paroi externe de logement ***33a*** et vient occuper la position représentée en trait ponctué sur les figures 13 et 14. Cette saillie du pontet constitue le témoin visible du bon verrouillage du tube dans l'embout.

On a indiqué plus haut que le démontage de la connexion peut s'effectuer manuellement par déformation de l'anneau de verrouillage ***4*** (FIG. 1, 2 et 3), ***24*** (FIG. 11 et 12) ou ***34*** (FIG. 13 et 14). Toutefois, pour certaines applications, les utilisateurs demandent que le démontage soit manuellement impossible et qu'au contraire il exige l'emploi d'un outillage spécifique.

L'invention permet de résoudre facilement ce problème particulier et propose à cet effet une première variante de réalisation visible sur les figures 15 et 16. Les organes déjà décrits sont affectés des mêmes repères que ceux des figures 1 à 7, mais augmentés de 40.

Si l'on se reporte aux figures 15 et 16 on voit que les bords latéraux d'une ouverture ***43c*** ménagée dans la paroi du logement ***43a*** comportent chacun un pli radial ***43'c***, de préférence terminé par un enroulement à son extrémité libre. Ainsi l'opérateur qui désire démonter la connexion ne peut plus atteindre le pontet ***44c*** avec les doigts mais doit, au contraire, disposer d'un outil, du genre pince, dont les mâchoires présentent une forme spécifique apte à pénétrer entre les plis ***43'c***. On obtient ainsi une sécurité accrue de la connexion qui interdit tout démontage non autorisé.

Une deuxième variante permettant d'obtenir la même sécurité est représentée sur la figure 17, dans laquelle, à nouveau, les organes déjà décrits sont affectés des mêmes références que ceux des figures 1 à 7, mais augmentées de 40.

Comme cela a déjà été indiqué, le pontet ***44c*** fait saillie à travers l'ouverture ***43c*** ménagée dans la paroi du logement ***43a***, lorsque l'anneau de verrouillage ***44*** assure l'immobilisation axiale du tube (non représenté) dans l'embout.

Toutefois, on notera que l'une au moins des branches du U formant le pontet ***44c*** présente un pli ***44'c*** situé à l'extérieur du logement ***43a*** lorsque l'anneau ***44*** est en position de verrouillage. De préférence et comme représenté sur la figure 17, il existe un pli ***44'c*** sur chacune des branches du pontet qui constituent ainsi des aspérités susceptibles de prendre appui sur la face extérieure de la paroi du logement ***43a*** dans la région de l'ouverture ***43c.*** Bien évidemment, ces aspérités pourraient être réalisées par tout moyen approprié, tel que "*crevé*" *ou* analogue.

A nouveau, une simple pression radiale manuelle sur le pontet ***44c*** ne suffit plus pour effectuer le démontage de la connexion. Il est au contraire nécessaire, grâce à un outil spécifique approprié, de pincer les branches du pontet pour éliminer l'appui des aspérités sur les bords de l'ouverture ***43c*** avant de pouvoir exercer sur le pontet l'effort radial autorisant le démontage de la connexion.

Il va de soi que toutes les dispositions concernant l'interdiction du démontage manuel peuvent être facilement adaptées par l'homme du métier aux diverses variantes de structure d'embout qui ont été décrites.

La réalisation représentée aux figures 8 à 10 comporte un témoin permanent de verrouillage. Les utilisateurs demandent parfois un témoin complémentaire détachable de la connexion après verrouillage. C'est notamment le cas pour le premier montage de la connexion dans les fabrications en grande série, en particulier dans l'industrie automobile.

L'invention permet, là encore, de résoudre facilement ce problème particulier et propose à cet effet une variante de réalisation visible sur les figures 18, 19 et 20. Les organes déjà décrits sont affectés des mêmes repères que ceux des figures 1 à 10, mais augmentés de 50.

Si l'on se reporte aux figures 18 à 20, on voit que l'extrémité libre d'une patte ***59c*** du témoin permanent et coulissant ***59*** est munie d'un pli radial ***59e*** dirigé vers l'extérieur de l'embout. Le témoin complémentaire ***60*** est constitué par une bague, de préférence en matière plastique, ayant une section en C, la branche extérieure du C définissant une gorge ***60a*** susceptible de recevoir le pli radial ***59e*** de la patte ***59c*** et celui de la patte inférieure non représentée. De préférence et comme on le voit sur la figure 20, la bague ***60*** s'étend sensiblement sur trois quarts de cercle seulement.

Au cours du mouvement d'emmanchement (déjà décrit en référence aux figures 8 et 9), les pattes du témoin permanent ***59*** coulissent, vers la droite de la figure 17, sous les pontets correspondants de l'anneau de verrouillage ***54*** entraînant ainsi la bague ***60*** vers la droite. Ce dernier mouvement de la bague ***60*** est cependant limité, la branche inférieure de sa section en ***C*** venant prendre appui sur la face radiale externe ***53'b*** du logement ***53a*** de l'anneau de verrouillage. Le verrouillage du tube ***51*** n'étant pas encore obtenu, l'opérateur poursuit le mouvement du tube vers la droite jusqu'à la position représentée sur la figure 19 correspondant au verrouillage complet.

Le pli radial ***59e*** de la patte ***59c***,de même que celui de la patte inférieure non représentée, quittent alors la gorge ***60a*** de la bague ***60*** par déformation élastique des pattes. La bague ***60*** entoure donc l'entrée ***62a*** de l'embout et peut, si on le souhaite, être retirée radialement de l'embout, en la déformant ou même en la brisant. Bien évidemment la bague ***60*** peut sans inconvénient rester en place autour de l'embout, notamment si elle s'étend sur un cercle complet.

Si la connexion a été démontée, il sera encore possible de vérifier le verrouillage complet du tube après un nouvel emmanchement, grâce à la présence des pattes du témoin permanent ***59*** qui s'effacent en quasi-totalité sous les pontets correspondants.

Il va de soi que ces dernières dispositions concernant le témoin détachable peuvent être adaptées par l'homme du métier aux diverses variantes de structure d'embout qui ont été décrites.

## Revendications

1. Embout de connexion rapide permettant le raccordement étanche d'un tube rigide ***(1)*** pourvu, à quelque distance de son extrémité libre ***(1b)*** destinée à être emmanchée dans l'entrée ***(2a)*** de l'embout, d'un bourrelet ***(1a)*** faisant radialement saillie par rapport à la surface extérieure du tube et présentant un flanc sensiblement radial ***(1d)*** opposé à ladite extrémité, ledit embout présentant un premier logement interne comprenant un joint annulaire d'étanchéité ***(6)*** susceptible de venir en contact avec la surface extérieure du tube entre son extrémité libre et son bourrelet et un deuxième logement interne ***(3a)*** pour recevoir un anneau de verrouillage ***(4)*** élastiquement déformable dans le sens radial, ledit anneau comportant au moins une zone faisant radialement saillie sur la surface extérieure de l'embout à travers une ouverture ménagée dans celui-ci, la région centrale dudit anneau étant constituée par des portions sensiblement cylindriques ***(4a-4b)*** dont le diamètre à l'état libre est au plus égal au diamètre du tube ***(1)****,* caractérisée en ce que l'anneau de verrouillage ***(4)*** est formé par une bande métallique mince enroulée sur elle-même de manière à présenter un profil fermé, les deux extrémités de ladite bande étant fixées l'une à l'autre, ledit anneau présentant un profil généralement oblong et ladite zone faisant radialement saillie à l'extérieur de l'embout étant située à une extrémité du grand diamètre du profil oblong et en ce que la zone de cet anneau faisant radialement saillie à l'extérieur de l'embout est constituée par un pontet en **U** inversé ***(4c)*** dont la base forme, pour l'essentiel, la partie radialement saillante à l'extérieur du corps de l'embout.

2. Embout de connexion selon la revendication 1, caractérisé en ce que l'anneau de verrouillage comporte deux zones ***(4c-4d)*** faisant radialement saillie à l'extérieur de l'embout et disposées respectivement à chacune des extrémités du grand diamètre de l'anneau.

3. Embout de connexion selon la revendication 1 ou 2, caractérisé en ce les bords antérieurs ***(4e-4f)*** de l'anneau de verrouillage sont évasés, au moins dans la région des portions cylindriques ***(4a-4b)****.*

4. Embout de connexion selon l'une quelconque des revendications 1 à 3, caractérisé en ce qu'il comporte un témoin permanent de verrouillage ***(9)*** monté coulissant et constitué par une bague rigide ***(9a)*** dont le diamètre intérieur est au moins égal au diamètre extérieur du tube mais inférieur au diamètre extérieur de son flanc d'appui ***(1d)*** sur l'anneau de verrouillage, ladite bague possédant, sur sa périphérie extérieure, au moins une patte ***(9c)***, s'étendant axialement et engagée sous la base du pontet ***(4c)*** de l'anneau à travers une ouverture ***(3c)*** de l'embout, la longueur axiale de ladite patte étant telle que son extrémité libre est visible au-delà du pontet lorsque le tube n'est pas verrouillé dans la connexion mais disparaît lorsque le tube est verrouillé.

5. Embout de connexion selon la revendication 4, caractérisé en ce que la bague ***(59a)*** du témoin permanent de verrouillage possède deux pattes ***(59c)*** diamétralement opposées l'une à l'autre, l'extrémité libre de chaque patte comportant un pli radial ***(59e)****.*

6. Embout de connexion selon la revendication 5, caractérisé en ce qu'il comporte un témoin complémentaire de verrouillage, ledit témoin étant détachable et constitué également par une bague ***(60)*** dont la section en forme de C présente une gorge ***(60a)*** susceptible de recevoir le pli radial ***(59e)*** des pattes ***(59c)****.*

7. Embout de connexion selon l'une quelconque des revendications 4 à 6, caractérisé en ce que la bague formant le témoin permanent de verrouillage ***(9, 19, 29)*** est pourvue de moyens élastiques ***(9c, 19c, 29f)*** prenant appui sur l'embout pour repousser ladite bague en permanence vers l'entrée de l'embout.

8. Embout de connexion selon la revendication 1 ou 2, caractérisé en ce qu'il comporte une rondelle d'appui ***(40)*** disposée en arrière de l'anneau de verrouillage ***(4)*** par rapport à l'entrée ***(32a)*** de l'embout et montée coulissante dans l'embout entre une position active et une position inactive, ladite rondelle présentant au moins deux zones d'appui ***(40a)*** diamétralement opposées pour les portions cylindriques ***(4a-4b)*** de l'anneau de verrouillage, le diamètre séparant lesdites zones étant au moins égal au diamètre du bourrelet du tube à emmancher dans l'embout cependant que le diamètre intérieur de la rondelle est inférieur au diamètre dudit bourrelet.

9. Embout de connexion selon l'une quelconque des revendications 1 à 8, caractérisé en ce que la ou les ouvertures ***(43c)*** de l'embout pour le passage du ou des pontets ***(44c)*** de l'anneau de verrouillage présentent des bords latéraux ***(43'c)*** radialement saillants pour interdire l'action manuelle sur la base du pontet.

10. Embout de connexion selon l'une quelconque des revendications 1 à 9, caractérisé en ce que, sur l'anneau de verrouillage ***(44)***, l'une au moins des branches du pontet ***(44c)*** présente, dans sa zone faisant saillie à l'extérieur de l'embout, un pli ***(44'c)*** ou analogue, susceptible de prendre appui, dans la position de verrouillage de l'anneau, sur la face extérieure de la paroi ***(43)*** de l'embout.

## Patentansprüche

1. Schnellverbindungsmuffe, die den dichten Anschluss eines festen Rohrs (1) erlaubt, das in einem Abstand von seinem zum Aufnehmen im Eingang (2a) der Muffe bestimmten freien Ende (1b) mit einem Wulst (la) versehen ist, der in Bezug auf die äußere Fläche des Rohres radial vorragt und eine im Wesentlichen radiale, dem besagten Ende abgewandte Flanke (1d) aufweist, wobei die Muffe einen ersten inneren Sitz mit einer Ringdichtung (6), der mit der äußeren Fläche des Rohres zwischen seinem freien Ende und seinem Wulst in Kontakt treten kann, und einen zweiten inneren Sitz (3a) zur Aufnahme einer in der radialen Richtung elastisch verformbaren Verriegelungsöse (4) aufweist, die zumindest einen radial über die äußere Fläche der Muffe quer durch eine in dieser angebrachten Öffnung vorstehenden Bereich aufweist, wobei der zentrale Bereich der Öse durch im Wesentlichen zylindrische Abschnitte (4a-4b) gebildet ist, deren Durchmesser im freien Zustand höchstens gleich dem Durchmesser des Rohres (1) ist, dadurch gekennzeichnet, dass die Verriegelungsöse (4) durch ein dünnes metallisches Band gebildet ist, welches aufgerollt ist, so dass es ein geschlossenes Profil darstellt, wobei die zwei Enden des Bandes aneinander befestigt sind, die Öse ein im Wesentlichen längliches Profil aufweist und der an der Außenseite der Muffe radial vorstehende Bereich an einem Durchmessergrößeren Ende des länglichen Profils vorhanden ist, und dass der an der Außenseite der Muffe radial vorstehende Bereich der Öse durch eine Brücke (4c) in Form eines verkehrten U gebildet ist, deren Basis im Wesentlichen den an der Außenseite des Muffenkörpers radial vorstehenden Abschnitt bildet.

2. Verbindungsmuffe nach Anspruch 1, dadurch gekennzeichnet, dass die Verriegelungsöse zwei Bereiche (4c-4d) aufweist, die an der Außenseite der Muffe radial vorstehen und an einem Durchmesser-größeren Ende der Öse vorgesehen sind.

3. Verbindungsmuffe nach Anspruch 1 oder 2, dadurch gekennzeichnet, dass die vorderen Ränder (4e-4f) der Verriegelungsöse zumindest im Bereich der zylindrischen Abschnitte (4a-4b) erweitert sind.

4. Verbindungsmuffe nach einem der Ansprüche 1 bis 3, dadurch gekennzeichnet, dass sie eine verschiebbar angebrachte permanente Verriegelungsanzeige (9) aufweist, die durch einen steifen Ring (9a) gebildet ist, dessen Innendurchmesser zumindest gleich dem Außendurchmesser des Rohres, aber kleiner als der Außendurchmesser seiner Abstützflanke (1d) auf der Verriegelungsöse ist, wobei der Ring an seinem Außenumfang zumindest eine Pratze (9c) aufweist, die sich in axialer Richtung erstreckt und unter der Basis der Brücke (4c) der Öse durch eine Öffnung (3c) der Muffe eingreift, wobei die axiale Länge der Pratze so bemessen ist, dass ihr freies Ende über die Brücke hinaus sichtbar ist, wenn das Rohr nicht in der Verbindung verriegelt ist, aber verschwindet, wenn das Rohr verriegelt ist.

5. Verbindungsmuffe nach Anspruch 4, dadurch gekennzeichnet, dass der Ring (59a) zur permanenten Verriegelungsanzeige zwei einander diametral gegenüberliegende Pratzen (59c) aufweist, wobei das freie Ende jeder Pratze einen radialen Knick (59e) aufweist.

6. Verbindungsmuffe nach Anspruch 5, dadurch gekennzeichnet, dass sie eine zusätzliche Verriegelungsanzeige aufweist, die lösbar und ebenfalls durch einen Ring (60) gebildet ist, dessen C-förmiger Querschnitt eine Nut (60a) zur Aufnahme des radialen Knicks (59e) der Pratze (59c) aufweist.

7. Verbindungsmuffe nach einem der Ansprüche 4 bis 6, dadurch gekennzeichnet, dass der die permanente Verriegelungsanzeige (9, 19, 29) bildende Ring mit elastischen Mitteln (9c, 19c, 29f) versehen ist, die gegen die Muffe anliegen, so dass der Ring ständig gegen den Eingang der Muffe gedrückt ist.

8. Verbindungsmuffe nach Anspruch 1 oder 2, dadurch gekennzeichnet, dass sie eine Anlagescheibe (40) aufweist, die bezüglich des Eingangs (32a) der Muffe hinter der Verriegelungsöse (4) vorgesehen und in der Muffe zwischen einer aktiven Stellung und einer inaktiven Stellung verschiebbar montiert ist, wobei die Scheibe zumindest zwei einander diametral gegenüberliegende Anlagebereiche (40a) für die zylindrischen Abschnitte (4a-4b) der Verriegelungsöse aufweist, wobei der die Bereiche trennende Durchmesser zumindest gleich dem Durchmesser des in der Muffe aufzunehmenden Wulstes des Rohres ist, während der innere Durchmesser der Scheibe kleiner ist als der Durchmesser des Wulstes.

9. Verbindungsmuffe nach einem der Ansprüche 1 bis 8, dadurch gekennzeichnet, dass die Öffnung(en) (43c) der Muffe für den Durchtritt der Brücke(n) (44c) der Verriegelungsöse radial vorspringende seitliche Ränder (43'c) zur Unterbindung einer händischen Betätigung der Basis der Brücke aufweisen.

10. Verbindungsmuffe nach einem der Ansprüche 1 bis 9, dadurch gekennzeichnet, dass auf der Verriegelungsöse (44) zumindest einer der Schenkel der Brücke (44c) in seinem an der Außenseite der Muffe vorstehenden Bereich einen Knick (44'c) oder dergleichen aufweist, der in der verriegelten Stellung der Öse an der äußeren Fläche der Wand (43) der Muffe in Anlage kommen kann.

## Claims

1. Connector of a quick connection allowing tight connection of a rigid tube (1) provided, at some distance from its free end (1b) intended to be fitted in the inlet (2a) of the connector, with a bead (la) projecting radially with respect to the outer surface of the tube and presenting a substantially radial side (1d) opposite said end, said connector presenting a first inner housing comprising an O-ring (6) capable of coming into contact with the outer surface of the tube between its free end and its bead and a second inner housing (3a) to receive a locking ring (4) elastically deformable in the radial direction, said ring comprising at least one zone projecting radially on the outer surface of the connector through an opening made therein, the central region of said ring being constituted by substantially cylindrical portions (4a-4b) whose diameter in the free state is at the most equal to the diameter of the tube (1), characterised in that the locking ring (4) is formed by a thin metal band wound on itself so as to present a closed profile, both ends of said band being fixed to each other, said ring presenting a generally oblong profile and said zone projecting radially outside the connector being located at an end of the large diameter of the oblong profile and in that the zone of this ring projecting radially outside the connector is constituted by a bridge in the form of an upturned U (4c) whose base essentially forms the part radially projecting outside the body of the connector.

2. The connector according to Claim 1, characterised in that the locking ring comprises two zones (4c-4d) projecting radially outside the connector and disposed respectively at each of the ends of the large diameter of the ring.

3. The connector according to Claim 1 or 2, characterised in that the front edges (4e-4f) of the locking ring are widened, at least in the region of the cylindrical portions (4a-4b).

4. The connector according to any one of Claims 1 to 3, characterised in that it comprises a slidably mounted permanent locking indicator (9) constituted by a rigid ring (9a) whose inner diameter is at least equal to the outer diameter of the tube but less than the outer diameter of its bearing side (1d) on the locking ring, said ring presenting, on its outer periphery, at least one tab (9c) extending axially and engaged beneath the base of the bridge (4c) of the ring through an opening (3c) of the connector, the axial length of said tab being such that its free end is visible beyond the bridge when the tube is not locked in the connection but disappears when the tube is locked.

5. The connector according to Claim 4, characterised in that the ring (59a) of the permanent locking indicator presents two tabs (59c) diametrally opposite each other, the free end of each tab comprising a radial fold (59e).

6. The connector according to Claim 5, characterised in that it comprises a complementary locking indicator, said indicator being detachable and likewise constituted by a ring (60) whose C-section presents a groove (60a) capable of receiving the radial fold (59e) of the tabs (59c).

7. The connector according to any one of Claims 4 to 6, characterised in that the ring forming the permanent locking indicator (9, 19, 29) is provided with elastic means (9c, 19c, 29f) abutting on the connector to push the ring permanently towards the inlet of the connector.

8. The connector according to Claim 1 or 2, characterised in that it comprises a bearing washer (40) disposed to the rear of the locking ring (4) with respect to the inlet (32a) of the connector and slidably mounted in the connector between an active position and an inactive position, said washer presenting at least two diametrally opposite bearing zones (40a) for the cylindrical portions (4a-4b) of the locking ring, the diameter separating said zones being at least equal to the diameter of the bead of the tube to be fitted in the connector, while the inner diameter of the washer is less than the diameter of said bead.

9. The connector according to any one of Claims 1 to 8, characterised in that the or each opening (43c) of the connector for the passage of the or each bridge (44c) of the locking ring presents lateral edges (43'c) projecting radially to prevent manual action on the base of the bridge.

10. The connector according to any one of Claims 1 to 9, characterised in that, on the locking ring (44), at least one of the arms of the bridge (44c) presents, in its zone projecting outwardly of the connector, a fold (44'c) or the like capable of abutting, in the position of locking of the ring, on the outer face of the wall (43) of the connector.
